# EUROPÄISCHE PATENTSCHRIFT

(11) **EP 0 473 901 B1**
(45) Veröffentlichungstag und Bekanntmachung des Hinweises auf die Patenterteilung: **14.08.1996**
(21) Anmeldenummer: 91111237.3
(22) Anmeldetag: 05.07.1991
(51) Int. Cl.: G01N 29/00

(54) **Sensoranordnung zum Nachweisen eines Stoffes in einer Flüssigkeit**
Sensor for measuring a component in a liquid
Détecteur pour mettre en évidence un composant dans un liquide

(30) Priorität: 07.09.1990 DE 4028500
(43) Veröffentlichungstag der Anmeldung: 11.03.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Engelbrecht, Michael, W-8017 Ebersberg (DE); Kösslinger, Conrad, W-8000 München (DE)
(74) Vertreter: Schoppe, Fritz, Dipl.-Ing.

(56) Entgegenhaltungen:
- WO-A-89/09938
- US-A- 4 783 987
- US-A- 4 788 466
- ANALYTICA CHIMICA ACTA Bd. 142, 1982, AMSTERDAM, NL Seiten 281 - 284 T. NOMURA ET AL. 'Frequency shifts of piezoelectric quartz crystals immersed in organic liquids'
- ANALYTICAL CHEMISTRY Bd. 58, Nr. 6, Mai 1986, COLUMBUS US Seiten 1206 - 1209 M. THOMPSON ET AL. 'Liquid-Phase Piezoelectric and Acoustic Transmission Studies of Interfacial Immunochemistry'

## Beschreibung

Die vorliegende Erfindung betrifft eine Sensoranordnung zum Nachweisen eines Stoffes in einer Flüssigkeit mit einer einen Schwingtransistor und eine Rückkopplungsschaltung aufweisenden Oszillatorschaltung und mit einem von dieser betriebenen Schwingquarz, der mit einer Schwingquarzseite mit der Flüssigkeit in Kontakt steht, nach dem Oberbegriff des Patentanspruchs 1.

Insbesondere befaßt sich die vorliegende Erfindung mit einer Sensoranordnung, die als sogenannter Biosensor zum Nachweisen des Vorliegens oder zum Messen der Konzentration eines Stoffes in einer Flüssigkeit dient. Unter dem Begriff Flüssigkeit im Sinne der vorliegenden Anmeldung sei auch jegliche, auf den Schwingquarz aufgetragene chemisch aktive Schicht zu subsumieren. Derartige Biosensoren erfassen einen Stoff in einer Flüssigkeit, wie beispielsweise einen chemischen, biologischen oder biochemischen Stoff oder einen Mikroorganismus dadurch, daß der betreffende Stoff zu einer Massenanlagerung des Stoffes selbst oder einer den Stoff umfassenden Verbindung auf der mit der Flüssigkeit in Kontakt stehenden Schwingquarzseite führt, wodurch die Resonanzfrequenz des Schwingquarzes beeinflußt wird. Diese Änderung der Resonanzfrequenz dient zur Detektion des Vorliegens des nachzuweisenden Stoffes in der Flüssigkeit und kann auch zur Bestimmung der Konzentration des betreffenden Stoffes herangezogen werden.

Sensoren der eingangs genannten Art sind beispielsweise bekannt aus der Fachveröffentlichung K.A. Davis, T.R. Leary, Anal. chem. 61 (1989), Seiten 1227 bis 1230.

Ferner sind Biosensoren der oben beschriebenen Art bereits offenbart in der älteren, nicht vorveröffentlichten Patentanmeldung P 40 13 665.5-52 der Anmelderin.

Bekannte Sensoranordnungen arbeiten häufig mit Oszillatorschaltungen, bei denen eine unerwünschte hochfrequente elektrische Einkopplung in die Flüssigkeit bzw. die Quarzbeschichtung stattfindet. Häufig arbeitet auch der Quarz bei derartigen bekannten Schaltungen auf seiner hochohmigen Resonanz. Schwankende parasitäre Parallelkapazitäten, die durch die Flüssigkeit bzw. die Beschichtung entstehen, können die Schwingfrequenz beeinflussen.

Üblicherweise haben die Oszillatorschaltungen der bekannten Biosensoranordnungen Amplitudenregelkreise für die Verstärkungsregelung. Derartige Regelkreise sind nicht nur schaltungstechnisch aufwendig, sondern führen auch zu einem zusätzlichen Phasenrauschen, das die mit der Sensoranordnung erzielbare Meßgenauigkeit herabsetzt.

Ein weiteres Problem bekannter Sensoranordnungen besteht darin, daß deren Schwingquarz bei Flüssigkeiten mit hoher Viskosität, durch die die Schwingung stark bedämpft wird, nicht mehr schwingen.

Häufig arbeiten bekannte Sensoranordnungen lediglich im Frequenzbereich zwischen 2,5 und 10 MHz, um die bei höheren Frequenzen auftretenden Empfindlichkeitsprobleme gegenüber Druckschwankungen und Viskositätsschwankungen der Flüssigkeit zu vermeiden. In diesen Frequenzbereichen ist jedoch die Empfindlichkeit der Sensoranordnung auf Massenänderungen an der Oberfläche der mit der Flüssigkeit in Kontakt stehenden Schwingquarzseite relativ gering.

Aus dem Tagungsbericht Bernd Neubig, Schwingquarze in der Oszillatorschaltung in "Schwingquarze, ein unverzichtbares Bauelement in der Elektronik, Seite 87 ff; Tagungsdokumentation/Quarzsymposium '85, Vistas Verlag, Berlin, sind praktisch sämtliche mögliche Oszillatorschaltungen bekannt. Insbesondere zeigt diese Fachveröffentlichung auf Seite 37 im Bild 30 die Schaltung eines Quarzoszillators mit hoher Kurzzeitstabilität, bei der der Schwingquarz zwischen dem Emitter des Schwingtransistors und der Masse parallel zu dem Emitterwiderstand des Schwingtransistors geschaltet ist. Diese Schaltungsanordnung arbeitet als zweistufiger Dreipunkt-Oszillator zusammen mit einem durch eine Kapazität und eine Induktivität gebildeten Schwingkreis am Ausgang einer Verstärkungsschaltung, mit der auch die Phase des Oszillators um 180^{o} gedreht wird. Irgendwelche Hinweise auf die Kombination dieses Oszillators mit einer Sensoranordnung zum Nachweisen eines Stoffes in einer Flüssigkeit sind dieser Veröffentlichung jedoch nicht zu entnehmen. Die dort gezeigte Oszillatorschaltung wird lediglich neben allen anderen Oszillatortypen als eine der möglichen Oszillatorschaltungen in dieser Schrift erörtert.

Eine mit der soeben erläuteren Oszillatorschaltung vergleichbare Oszillatorschaltung ist bekannt aus der Fachveröffentlichung M.M. Driscoll, Two-stage self-limiting series mode type quartz crystal oszillator exhibiting improved short-term frequency stability; Proc. 26th ASFC (1972), Seiten 43 bis 49. Auch diese Veröffentlichung befaßt sich nicht mit Problemen, wie sie den oben erläuterten Sensoranordnungen zum Nachweisen eines Stoffes in einer Flüssigkeit zu eigen sind.

Aus der Fachveröffentlichung T. Nomura, M. Okuhara, Frequency shifts of piezoelectric quartz crystals immersed in organic liquids, Anal. Chim. Acta, 142 (1982) Seiten 281 bis 284 ist eine Sensoranordnung zum Nachweisen eines Stoffes in einer Flüssigkeit bekannt, die einen Schwingquarz mit einer rückgekoppelten Oszillatorschaltung umfaßt. Bei dieser Schaltung liegt der Schwingquarz zwischen der Basis des Schwingtransistors und Masse. Am Transistorausgang liegt eine abstimmbare Schwingkreisschaltung, die zum Eingang über ein Widerstandsteilernetzwerk ein Rückkopplungssignal zurückführt. Zwar ist der Aufbau dieser bekannten Sensoranordnung einfach und benötigt nur wenige Bauelemente. Jedoch schwingt der Schwingquarz auf der für Sensoren ungeeigneten hochohmigen Parallelresonanz. Außerdem schwingt der Quarz nicht in Flüssigkeiten von hoher Dichte und Viskosität, so daß die Sensoranordnung nicht für Messungen in Flüssigkeiten hoher Dichte und Viskosität geeignet ist. Die Amplitudenbegrenzung der Schaltung erfolgt durch Übersteuerung des Transistors, wodurch das Phasenrauschen erhöht wird.

Aus der Fachveröffentlichung T. Nomura, M. Watanabe, T.S. West, Behavior of piezoelectric quartz crystals in solutions with application to the determination of iodide, Anal. Chim. Acta, 175 (1985), Seiten 107 bis 116 ist gleichfalls eine Sensorandordnung zum Nachweisen eines Stoffes in einer Flüssigkeit bekannt, die einen Schwingquarz aufweist, der mit einem rein digitalen Schaltkreis beschaltet ist. Die Impedanz der digitalen Schaltung, die parallel zum Schwingquarz liegt, ändert sich stark in Abhängigkeit von den Schaltzuständen, wodurch ein starkes Phasenrauschen auftritt. Auch ist keine der Elektroden des Schwingquarzes geerdet, so daß es zu starken elektrischen Einkopplungen in die Flüssigkeit bzw. die chemische Nachweisschicht des Schwingquarzes kommt. Somit vermag auch diese bekannte Schaltung trotz ihrer guten Schwingungseigenschaften in Flüssigkeiten aufgrund der Quarzschwingung bei der niederohmigen Serienresonanz nicht zu befriedigen.

Eine mit der soeben beschriebenen Schaltung vergleichbare Schaltung ist aus der Fachveröffentlichung Y. Shou-Zhuo, M. Zhi-Hong, Frequency properties of a piezoelectric quartz crystal in solutions and application to total salt determination, Anal. Chim. Acta, 193 (1987), Seiten 97 bis 105 bekannt. Die mit dieser Oszillatorschaltung arbeitende Sensoranordnung hat gleichfalls die soeben erläuterten Probleme.

Aus der Fachveröffentlichung M. Thompson, C.L. Arthur, G.K. Dhaliwal, Liquid-phase piezoelectric and acoustic transmission studies of Interfacial Immunochemistry, Anal. Chem. 58, (1986), Seiten 1206 bis 1209 ist eine Sensoranordnung zum Nachweisen eines Stoffes in der Flüssigkeit einer Durchflußzelle bekannt, die mit einem Schwingquarz arbeitet, der mit Frequenzen von 2,5 bis 5 MHz betrieben wird. Die Oszillatorschaltung umfaßt im wesentlichen einen Amplitudenregelkreis für die automatische Verstärkungssteuerung mit einem Amplitudendetektor, einem Komparator und einem Verstärker für die Ansteuerung eines spannungsgesteuerten Verstärkers. Die so gebildete Verstärkungsregelschleife erzeugt jedoch zusätzliches Phasenrauschen. Daher ist die bekannte Sensoranordnung für viele Anwendungsfälle weder ausreichend empfindlich noch ausreichend genau.

Eine mit der soeben erläuterten Sensoranordnung im wesentlichen übereinstimmende Sensoranordnung ist ferner beschrieben in der Fachveröffentlichung M. Thompson, G.K. Dhaliwal, C.L. Arthur, G.S. Calabrese, The potential of the bulk acoustic wave device as a liquid-phase immunosensor, IEEE Transactions on Ultrasonics, Ferroelectrics and Frequency Control Vol. UFFC-34 No. 2 March 1987.

Ausgehend von diesem Stand der Technik liegt der vorliegenden Erfindung die Aufgabe zugrunde, eine Sensoranordnung zum Nachweisen eines Stoffes der eingangs genannten Art so weiterzubilden, daß hochfrequente elektrische Einkopplungen in die Flüssigkeit oder die Sensorbeschichtung verhindert werden, daß schwankende parasitäre Parallelkapazitäten, die durch die Flüssigkeit oder die Beschichtung entstehen, keinen Einfluß auf die Schwingfrequenz haben, daß der Schwingquarz der Sensoranordnung auch bei starker Bedämpfung, wie sie beispielsweise in Flüssigkeiten mit hoher Viskosität auftritt, schwingt, und daß die Sensoranordnung den Stoff mit einer hohen Empfindlichkeit erfaßt.

Diese Aufgabe wird durch eine Sensoranordnung gemäß Patentanspruch 1 gelöst.

Weiterbildungen der erfindungsgemäßen Sensoranordnung sind in den Unteransprüchen definiert.

Nachfolgend wird unter Bezugnahme auf die beiliegenden Zeichnungen eine bevorzugte Ausgestaltung der erfindungsgemäßen Sensoranordnung näher erläutert.

Es zeigen:
- Fig. 1: einen Teil der Oszillatorschaltung der erfindungsgemäßen Sensoranordnung;
- Fig. 2: ein Blockschaltbild der erfindungsgemäßen Sensoranordnung; und
- Fig. 3: ein detailliertes Schaltdiagramm der erfindungsgemäßen Sensoranordnung zum Nachweisen eines Stoffes.

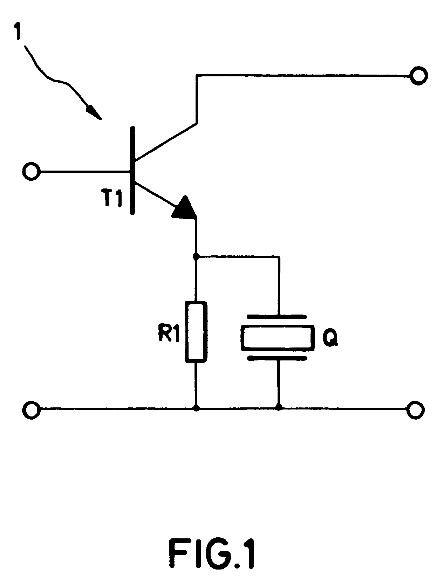

Wie in Fig. 1 gezeigt ist, sind bei der erfindungsgemäßen Sensoranordnung, die in ihrer Gesamtheit mit dem Bezugszeichen 1 bezeichnet ist, ein Schwingquarz Q in Parallelschaltung zu einem Emitterwiderstand R1 zwischen einem Bezugspotential, das Masse sein kann, und einem Emitter eines Schwingtransistors T1 geschaltet, dessen Kollektor den Schaltungsausgang bildet. Wie dies an sich aus dem Bereich der Biosensoren bekannt ist, steht der Schwingquarz Q beispielsweise mit einer Schwingquarzseite mit einer Flüssigkeit in Kontakt, in der der nachzuweisende Stoff enthalten ist. Bei dem Stoff kann es sich um biologische, chemische oder biochemische Stoffe handeln. Anstelle der Flüssigkeit kann auch eine Schwingquarzbeschichtung vorgesehen sein, die chemisch mit dem nachzuweisenden Stoff reagiert. In jedem Fall handelt es sich bei dem Schwingquarz Q der erfindungsgemäßen Sensoranordnung um einen solchen, der aufgrund seiner Einsatzbedingungen mit einer hohen Dämpfung arbeitet.

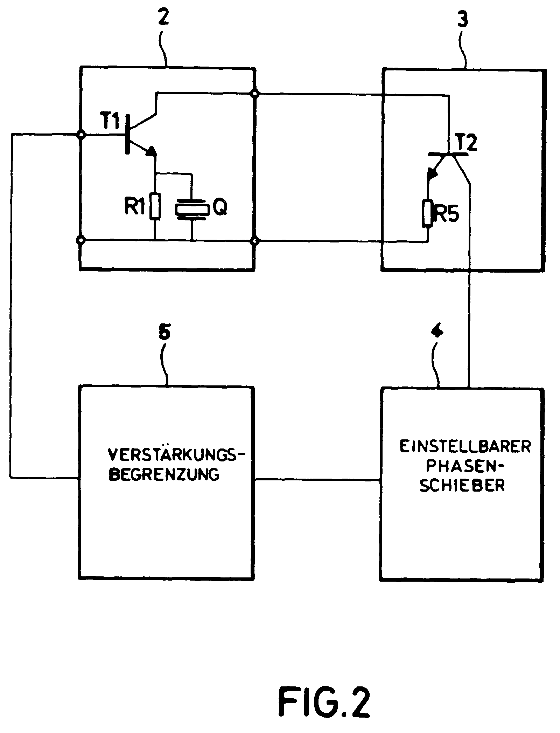

Unter Bezugnahme auf Fig. 2 wird nunmehr ein Blockdiagramm der erfindungsgemäßen Sensoranordnung näher erläutert, wobei der mit dem Bezugszeichen 2 in Fig. 2 bezeichnete Vierpol die Schaltungskonfiguration gemäß Fig. 1 ist, die den Schwingquarz Q und die zugehörige Verstärkerschaltung, bestehend aus dem Schwingtransistor T1 und dem Emitterwiderstand R1, umfaßt. Mit dem Bezugszeichen 3 ist die Gesamtheit einer 180°-Phasendrehungsschaltung bezeichnet, die einen zweiten Transistor T2 umfaßt, dessen Emitter über einen weiteren Widerstand R5 mit Masse und dessen Kollektor mit einer einstellbaren Phasenschieberschaltung verbunden ist, die ihrerseits in ihrer Gesamtheit mit dem Bezugszeichen 4 bezeichnet ist.

Bei der Darstellung gemäß Fig. 2 sind die 180°-Phasendrehungsschaltung 3 und die einstellbare Phasenschieberschaltung 4 als getrennte Schaltungseinheiten angegeben. Für den Fachmann ist es jedoch offensichtlich, daß die Funktion der 180°-Phasendrehung durch die Schaltung 3 und des einstellbaren Phasenschiebens durch die Schaltung 4 durch eine einstellbare Phasenschieberschaltung vereinigt werden können.

Der Ausgang der einstellbaren Phasenschieberschaltung 4 wird einer Verstärkungsbegrenzungsschaltung 5 zugeführt, deren Ausgang mit der Basis des Schwingtransistors T1 verbunden ist.

Durch die Phasenschieberschaltung 4 kann die erfindungsgemäße Sensoranordnung bezüglich der Resonanzfrequenz der Oszillatorschaltung in gewissen Grenzen verstellt werden, so daß ein Abgleich der Sensoranordnung 2 bis 5 an verschiedene Quarze in Verbindung mit unterschiedlichen Flüssigkeiten oder Beschichtungen vorgenommen werden kann.

Die Verstärkungsbegrenzungsschaltung verhindert, daß die Transistoren T1, T2 in ihrer Sättigung betrieben werden, so daß die die Meßgenauigkeit beeinträchtigenden Folgen eines hohen Phasenrauschens vermieden werden, welche anderenfalls auftreten würden.

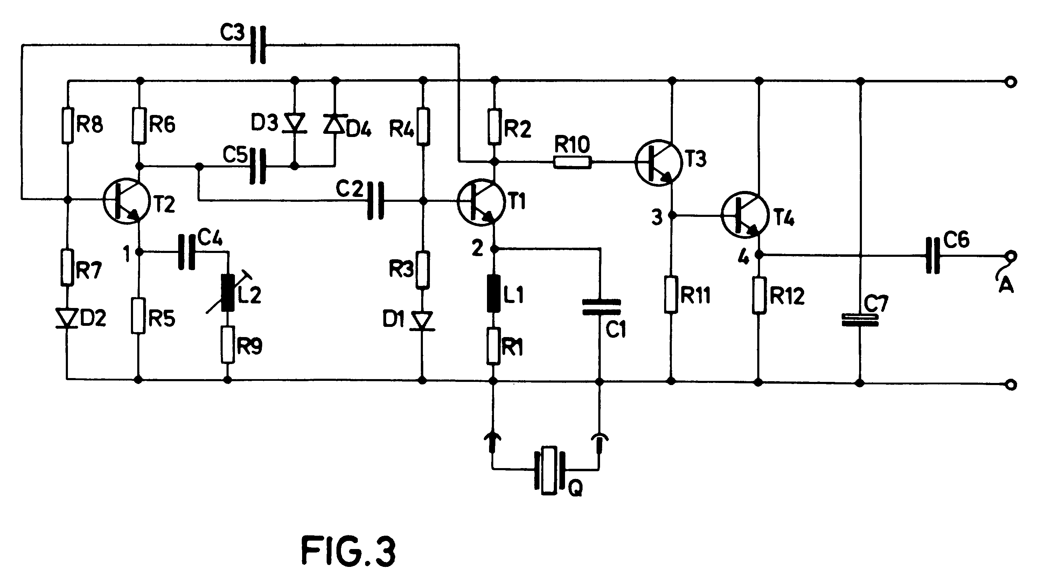

Eine detaillierte Schaltungsanordnung zur Realisierung der erfindungsgemäßen Sensoranordnung ist in Fig. 3 wiedergegeben. Wie in Fig. 3 gezeigt ist, liegt zwischen dem Emitter des Schwingtransistors T1 und Masse die Reihenschaltung einer ersten Induktivität L1 und des ersten Emitterwiderstandes R1. Zu dieser Reihenschaltung liegt parallel die Reihenschaltung aus dem Schwingquarz Q und einem ersten Kondensator C1. Der Kollektor des Schwingtransistors T1 ist über einen zweiten Widerstand R2 mit einem Versorgungspotential verbunden.

Die Basis des Schwingtransistors ist über einen dritten Widerstand R3, der in Reihe mit einer ersten Diode D1 geschaltet ist, einerseits mit Masse verbunden und andererseits über einen vierten Widerstand R4 an das Versorgungspotential angeschlossen. Hierdurch wird der Arbeitspunkt der Basis festgelegt.

Der Kollektor des zweiten Transistors T2 steht über einen zweiten Koppelkondensator C2 mit der Basis des Schwingtransistors T1 in Verbindung. Gleichfalls ist er über einen sechsten Widerstand mit dem Versorgungspotential verbunden und steht über einen fünften Kondensator C5 mit zwei antiparallel geschalteten Dioden D3, D4 in Verbindung, die mit dem Versorgungspotential an ihrer anderen Elektrode verbunden sind. Die antiparallel geschalteten Dioden D3, D4 bilden eine Amplitudenbegrenzung für das Wechselsignal, mit dem der Schwingtransistor T1 angesteuert wird.

Der Emitter des zweiten Transistors T2 steht über einen fünften Emitterwiderstand R5 mit Masse in Verbindung, zu dem parallel ein Serienschwingkreis geschaltet ist, der aus einem vierten Kondensator C4, einer einstellbaren zweiten Induktivität L2 und einem neunten Widerstand R9 besteht.

Die Basis des zweiten Transistors T2 steht über einen achten Widerstand R8 mit dem Versorgungspotential und über eine Serienschaltung eines siebten Widerstandes R7 und einer zweiten Diode D2 mit Masse in Verbindung. Die Basis des zweiten Transistors T2 ist über einen dritten Kondensator C3 kapazitiv mit dem Kollektor des Schwingtransistors T1 verbunden.

Der Kollektor des Schwingtransistors T1 steht über einen zehnten Widerstand R10 mit der Basis eines dritten Transistors T3 in Verbindung, dessen Kollektor mit dem Versorgungsspannungspotential und dessen Emitter über einen elften Widerstand R11 mit Masse verbunden ist. Der Emitter des dritten Transistors T3 ist ferner mit der Basis eines vierten Transistors T4 verbunden, dessen Kollektor mit dem Versorgungsspannungspotential und dessen Emitter über einen zwölften Widerstand R12 mit Masse verbunden ist. Der Emitter des vierten Transistors T4 ist über einen sechsten Kondensator C6 mit einem Schaltungsausgang A verbunden.

Die beschriebene erfindungsgemäße Sensoranordnung ermöglicht es, den Schwingquarz Q einseitig zu erden, so daß hochfrequente elektrische Einkopplungen in die Flüssigkeit bzw. in die Beschichtung des Schwingquarzes verhindert werden.

Der Quarz Q schwingt auf der niederohmigen Resonanz, so daß schwankende parasitäre Parallelkapazitäten, die durch die Flüssigkeit oder die Beschichtung entstehen, keinen Einfluß auf die Schwingfrequenz haben.

Die erfindungsgemäße Schaltung arbeitet ohne Amplitudenregelkreise, so daß durch Amplitudenregelkreise hervorgerufenes Phasenrauschen vermieden wird.

Die erfindungsgemäße Sensorschaltung arbeitet auch in Flüssigkeiten von hoher Viskosität bis zu der zweihundertfachen Viskosität von Wasser.

Die erfindungsgemäße Sensoranordnung kann mit Schwingquarzen in Flüssigkeiten bei Resonanzfrequenzen oberhalb von 20 MHz betrieben werden, woraus sich eine besonders hohe Massenempfindlichkeit ergibt.

## Patentansprüche

1. Sensoranordnung zum Nachweisen eines Stoffes in einer Flüssigkeit,
mit einer einen Schwingtransistor (T1) und eine Rückkopplungsschaltung (3 bis 5) aufweisenden Oszillatorschaltung und mit einem von dieser betriebenen Schwingquarz (Q), der mit einer Schwingquarzseite mit der Flüssigkeit in Kontakt steht, wobei der Schwingtransistor (T1) mit seinem Emitter an eine Parallelschaltung aus einem Emitterwiderstand (R1) und dem Schwingquarz (Q) geschaltet ist,
dadurch gekennzeichnet,
daß die Rückkopplungsschaltung eine einstellbare Phasenschieberschaltung (4) aufweist, die einen weiteren, an seiner Basis von dem Ausgang der Oszillatorschaltung angesteuerten Transistor (T2) aufweist, dessen Emitter über einen weiteren Emitterwiderstand (R5) gegen ein Bezugspotential geschaltet ist,
daß ein Serienschwingkreis (C4, L2, R9) mit einem einstellbaren passiven oder induktiven Blindelement parallel zu dem weiteren Emitterwiderstand (R5) geschaltet ist, und
daß die Rückkopplungsschaltung eine Amplitudenbegrenzungsschaltung (D3, D4) aufweist.

2. Sensoranordnung nach Anspruch 1, dadurch gekennzeichnet,
daß die Amplitudenbegrenzungsschaltung (2) antiparallel geschaltete Dioden (D3, D4) aufweist.

3. Sensoranordnung nach Anspruch 2, dadurch gekennzeichnet,
daß die antiparallel geschalteten Dioden (D3, D4) kapazitiv an die Basis des Schwingtransistors (T1) geschaltet sind.

4. Sensoranordnung nach einem der Ansprüche 1 bis 3, dadurch gekennzeichnet,
daß der Kollektor des Schwingtransistors (T1) über einen Kollektorwiderstand (R2) mit einem Versorgungspotential verbunden ist, und
daß der Kollektor des Schwingtransistors (T1) kapazitiv an die Basis des weiteren Transistors T2) angekoppelt ist.

5. Sensoranordnung nach einem der Ansprüche 1 bis 4, dadurch gekennzeichnet,
daß der Emitterwiderstand (R1) des Schwingtransistors (T1) in Reihe zu einer Kompensationsinduktivität (L1) liegt.

## Claims

1. A sensor arrangement for detecting a substance in a liquid,
comprising an oscillator circuit including an oscillating transistor (T1) and a feedback circuit (3 to 5) and further comprising a quartz crystal oscillator (Q) operated by said oscillator circuit and contacting the liquid with one quartz crystal oscillator side, said oscillating transistor (T1) having its emitter connected to a parallel connection consisting of an emitter resistor (R1) and the quartz crystal oscillator (Q),
characterized in
that the feedback circuit comprises an adjustable phase-shift circuit (4) which includes an additional transistor (T2) whose base is controlled by the output of the oscillator circuit and whose emitter is connected to a reference potential via an additional emitter resistor (R5),
that a series-resonant circuit (C4, L2, R9) with an adjustable passive or inductive reactive element is connected in parallel to said additional emitter resistor (R5), and
that the feedback circuit is provided with an amplitude limitation circuit (D3, D4).

2. A sensor arrangement according to claim 1, characterized in
that the amplitude limitation circuit (2) includes anti-parallel-connected diodes (D3, D4).

3. A sensor arrangement according to claim 2, characterized in
that the antiparallel-connected diodes (D3, D4) are capacitively connected to the base of the oscillating transistor (T1).

4. A sensor arrangement according to one of the claims 1 to 3, characterized in
that the collector of the oscillating transistor (T1) is connected to a supply potential via a collector resistor (R2), and
that the collector of the oscillating transistor (T1) is capacitively coupled to the base of the additional transistor (T2).

5. A sensor arrangement according to one of the claims 1 to 4, characterized in
that the emitter resistor (R1) of the oscillating transistor (T1) is connected in series with a compensation inductance (L1).

## Revendications

1. Détecteur pour mettre en évidence un composant dans un liquide,
avec un circuit oscillateur présentant un transistor oscillant (T1) et un circuit de réaction (3 à 5) et avec un quartz oscillant (Q), commandé par ce dernier, qui est en contact avec le liquide par un côté du quartz oscillant, le transistor oscillant (T1) étant connecté, par son émetteur, à une connexion en parallèle composée d'une résistance d'émetteur (R1) et du quartz oscillant (Q),
caractérisé par le fait
que le circuit de réaction présente un circuit de déphasage (4) qui présente un autre transistor (T2) commandé, à sa base, par la sortie du circuit oscillateur et dont l'émetteur est connecté, via une autre résistance d'émetteur (R5), à un potentiel de référence,
qu'un circuit oscillateur en série (C4, L2, R9) est connecté, avec un élément borgne passif ou inductif réglable, en parallèle avec l'autre résistance d'émetteur (R5), et
que le circuit de réaction présente un circuit limiteur d'amplitude (D3, D4).

2. Détecteur suivant la revendication 1, caractérisé par le fait que le circuit limiteur d'amplitude (2) présente des diodes connectées en anti-parallèle (D3, D4).

3. Détecteur suivant la revendication 2, caractérisé par le fait que les diodes connectées en anti-parallèle (D3, D4) sont connectées capacitivement à la base du transistor oscillant (T1).

4. Détecteur suivant l'une des revendications 1 à 3, caractérisé par le fait
que le collecteur du transistor oscillant (T1) est relié, via une résistance de collecteur (R2), à un potentiel d'alimentation, et
que le collecteur du transistor oscillant (T1) est couplé capacitivement à la base de l'autre transistor (T2).

5. Détecteur suivant l'une des revendications 1 à 4, caractérisé par le fait que la résistance d'émetteur (R1) du transistor oscillant (T1) est connectée en série avec une inductance de compensation (L1).
